(19) **Europäisches Patentamt**

**European Patent Office**

**Office européen des brevets**

(11) **EP 1 324 506 B1**

(12) **FASCICULE DE BREVET EUROPEEN**

(45) Date de publication et mention
de la délivrance du brevet:
**13.09.2006 Bulletin 2006/37**

(51) Int Cl.:
*H04B 5/00* (2006.01)    *G07C 9/00* (2006.01)

(21) Numéro de dépôt: **01205244.5**

(22) Date de dépôt: **28.12.2001**

(54) **Récepteur portable à deux antennes**

Tragbarer Empfänger mit zwei Antennen

Portable receiver with two antennas

(84) Etats contractants désignés:
**CH DE FR GB IT LI**

(43) Date de publication de la demande:
**02.07.2003 Bulletin 2003/27**

(73) Titulaire: **EM Microelectronic-Marin SA**
**2074 Marin (CH)**

(72) Inventeurs:
• **Lamothe, Christian**
**2000 Neuchâtel (CH)**
• **Sacksteder, Frédéric**
**2068 Hauterive (CH)**

(74) Mandataire: **Ravenel, Thierry Gérard Louis et al**
**I C B,**
**Ingénieurs Conseils en Brevets SA,**
**7, rue des Sors**
**2074 Marin (CH)**

(56) Documents cités:
**EP-A- 1 043 843**        **WO-A-98/07244**
**DE-A- 19 718 423**        **FR-A- 2 784 524**

**EP 1 324 506 B1**

**Description**

La présente invention concerne un récepteur portable destiné notamment à des applications dans l'industrie automobile, en particulier pour des systèmes d'ouverture avec clé sans contact, et plus généralement à des applications pour système de détection sans contact, en particulier pour des systèmes d'accès contrôlé avec badge sans contact.

Le récepteur portable comprend deux antennes respectivement orientées suivant des axes différents pour recevoir une première et une seconde composante d'un signal électromagnétique externe dans une plage de fréquences donnée, des moyens de filtrage disposés entre les deux antennes d'une part, et une unité réceptrice d'autre part

Un tel récepteur portable est connu, notamment du document FR 2 792 129, qui décrit un récepteur portable utilisable notamment dans un système antivol pour véhicule automobile. Dans ce cas, le récepteur est incorporé dans un support de type carte à puce, badge ou clé, appelé par la suite « identifiant », porté par le propriétaire du véhicule ou par une personne autorisée. Le support peut comporter également un émetteur, ce qui permet d'établir un dialogue du type émission-réception entre le véhicule muni du système antivol, appelé ci-après « unité d'identification », et la personne munie de l'identifiant.

Si le protocole d'accord entre l'unité d'identification et l'identifiant est respecté, un signal d'autorisation émis par l'unité d'identification permet d'activer des commandes, comme par exemple le verrouillage/déverrouillage des serrures ou encore le décodage d'un système d'anti-démarrage.

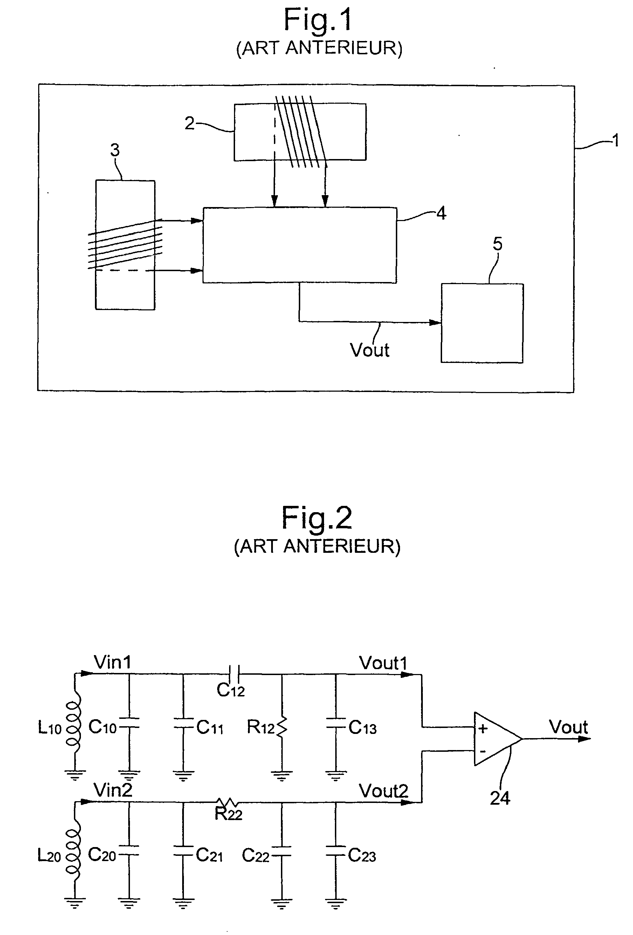

La figure 1 représente un récepteur portable 1 pouvant être incorporé dans un identifiant, comme par exemple une carte à puce, une clé ou un badge. Le récepteur 1 est muni de deux antennes 2 et 3, chacune des antennes étant réalisée sous la forme d'une bobine qui de préférence est bobinée sur un noyau en ferrite. Les deux antennes 2 et 3 sont disposées perpendiculairement, l'une par rapport à l'autre. Elles sont reliées à un circuit déphaseur 4, permettant de déphaser le signal fourni par les antennes. En sortie du circuit 4, un signal Vout est fourni à une unité réceptrice 5, comprenant généralement un circuit intégré programmé de façon approprié. Le circuit déphaseur 4 sera décrit plus en détail en liaison avec la figure 2, qui montre un tel circuit de l'art antérieur.

Il est à noter que le récepteur portable peut être également équipé d'une unité émettrice non représentée, lui permettant de répondre activement à l'unité d'identification, par exemple un véhicule automobile.

La figure 2 est une représentation du circuit déphaseur de la figure 1, incluant des éléments parasites, non négligeables, de ce circuit. Les antennes sont réalisées sous la forme de bobines L10 et L20 ayant une capacité parasite représentée respectivement par les condensateurs C10 et C20, auxquels peuvent être ajoutés des condensateurs d'accord C11 et C21, les antennes étant accordées sur la fréquence du signal à recevoir. Chaque bobine L10, L20, est reliée à un déphaseur RC ou CR, la bobine L10 étant reliée au circuit CR formé par le condensateur C12 et la résistance R12, et la bobine L20 étant reliée au circuit RC formé par la résistance R22 et le condensateur C22. En sortie des déphaseurs RC et CR, les condensateurs C13 et C23 représentent les capacités parasites des entrées du soustracteur 24.

Les signaux Vout1 et Vout2 récupérés en sortie des deux déphaseurs sont normalement déphasés respectivement de +45° et -45° par rapport aux signaux délivrés par les antennes, et donc théoriquement de 90° l'un par rapport à l'autre. Un tel récepteur présente donc théoriquement l'avantage de fournir une amplitude du signal de sortie relativement constante quelle que soit l'orientation de l'identifiant par rapport à l'unité d'identification.

Néanmoins, la réalisation du récepteur tel que décrit dans le document FR 2 792 129, ne permet pas d'obtenir le déphasage souhaité de 90° entre les signaux de sortie des deux déphaseurs, et par là même n'assure plus la stabilité en amplitude recherchée en sortie. En effet, le montage proposé ne tient ni compte du soustracteur placé en sortie des déphaseurs RC et CR, ni des caractéristiques propres des antennes.

Une des causes de disfonctionnement du circuit proposé par le document FR 2 792 129 provient de ce que les capacités parasites C13 et C23, qui sont parfois négligeables, sont dans le cadre de cette application du même ordre de grandeur que les capacités utilisées pour réaliser les déphaseurs CR et RC. Dans le cadre de la présente invention, on a mis en évidence que cela est une des raisons pour lesquelles le déphasage des deux déphaseurs n'est pas de +45° et -45°, et que le déphasage des deux signaux en entrée du soustracteur 24, l'un par rapport à l'autre, n'est pas de 90°.

La figure 3A est une simulation du fonctionnement du circuit selon l'art antérieur représentant l'évolution du déphasage entre les signaux délivrés en sortie des bobines, Vin1 et Vin2, les signaux Vout1 et Vout2 fournis en entrée du soustracteur et le signal Vout délivré en sortie du soustracteur. La fréquence utilisée pour ce type d'application est par exemple de 125 KHz, c'est pourquoi la simulation a été faite dans une fourchette de fréquences allant de 120 à 130 KHz. Néanmoins, il est tout à fait envisageable d'utiliser des fréquences de l'ordre du MHz ou du GHz.

Initialement les antennes reçoivent le même signal émis par l'antenne émettrice de l'unité d'identification. Les deux antennes étant choisies identiques, on pourrait s'attendre à ce que les signaux Vin1 et Vin2 délivrés en sortie des bobines soient identiques. Cependant, il n'en est pas ainsi, car les capacités parasites en entrée de l'unité réceptrice ont une influence non négligeable. Dans le cadre de la présente invention, on a remarqué que ces capacités parasites introduisent une dissymétrie entre les circuits équivalents des deux déphaseurs. Il en résulte que les déphasages souhaités (+45° et -45°) en sortie des deux déphaseurs, ainsi que le déphasage global (90°) entre les signaux Vout1 et Vout2, ne sont pas obtenus.

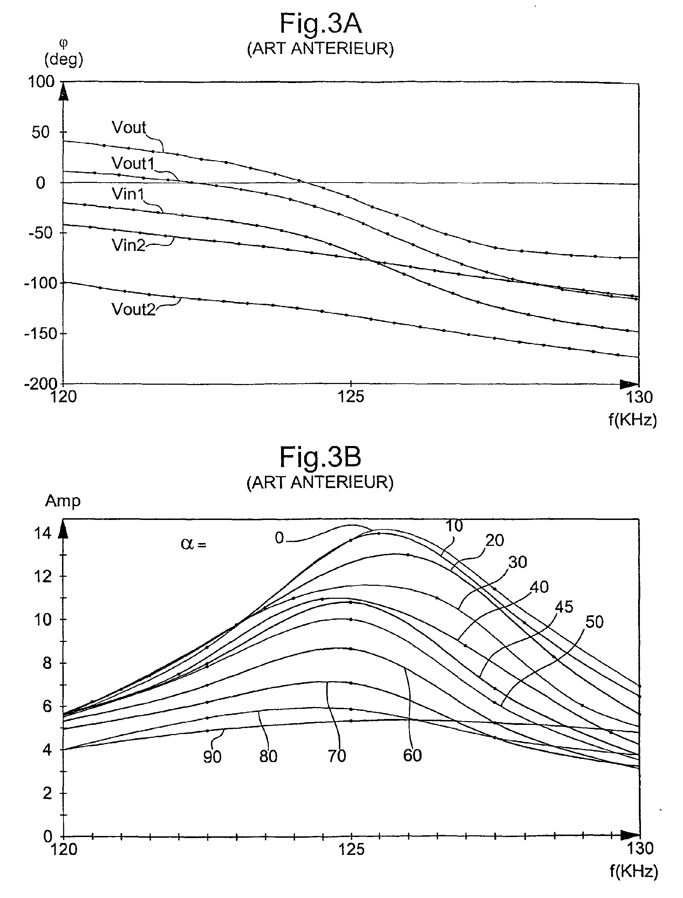

L'erreur de déphasage due aux éléments parasites, a également une influence sur l'homogénéité de l'amplitude du signal Vout. La figure 3B est une simulation du fonctionnement selon l'art antérieur, représentant l'évolution de l'amplitude du signal de sortie Vout en fonction de l'angle entre le signal émis par l'unité d'identification et les antennes de l'identifiant.

Les angles choisis sont pris avec un pas de 10° entre 0 et 90°. On note que l'amplitude du signal Vout de sortie varie de manière importante, suivant l'angle de réception du signal émis par l'unité d'identification. Les variations d'amplitude, dans le cadre de cet exemple, peuvent dépasser un facteur trois.

La solution selon le document FR 2 792 129 n'est donc pas satisfaisante. Tout d'abord, dans le domaine des récepteurs portables, l'un des soucis constant de l'homme du métier est de chercher à simplifier au maximum les circuits utilisés pour des questions d'encombrement et de consommation d'énergie du récepteur.

De plus, il est également important d'obtenir un identifiant susceptible de recevoir un signal ayant une amplitude la plus constante possible quelle que soit son orientation par rapport à l'unité d'identification, s'il se trouve dans le champ d'émission de cette dernière. En effet, pour des raisons de sécurité et de commodité d'usage, il est très important que la zone de dispersion soit minimale. On entend par zone de dispersion, la zone spatiale dans laquelle la réception ou non par le récepteur d'un signal externe émis, dépend de l'orientation de l'identifiant par rapport à l'unité d'identification.

La présente invention a pour but de pallier les inconvénients susmentionnés. Pour cela, le récepteur portable selon l'invention, en plus de ce qu'il comprend les caractéristiques définies en préambule, est caractérisé en ce que les moyens de filtrage comprennent un élément résistif connecté entre une des deux antennes et l'unité réceptrice et un élément capacitif connecté entre l'autre antenne et l'unité réceptrice.

Selon un mode de réalisation particulier, les antennes constituent des circuits oscillants présentant une fréquence de résonance sensiblement égale et une charge équivalente sensiblement égale.

D'autres caractéristiques et avantages de la présente invention apparaîtront dans la description suivante, donnée à titre d'exemple non limitatif et faite en référence aux dessins annexés, dans lesquels :

La figure 1, déjà décrite, représente un récepteur portable selon l'art antérieur.
La figure 2, déjà décrite, représente un circuit déphaseur utilisé dans le récepteur portable selon l'art antérieur.
Les figures 3A et 3B, déjà décrites, sont une simulation du fonctionnement du récepteur portable de l'art antérieur.
La figure 4A, représente la structure générale du récepteur portable selon l'invention.
La figure 4B, représente la décomposition d'un signal externe dans le plan de réception formé par les deux antennes.
La figure 5 représente une structure détaillée du récepteur portable selon l'invention.
La figure 6 est une simulation du fonctionnement du récepteur portable selon l'invention.

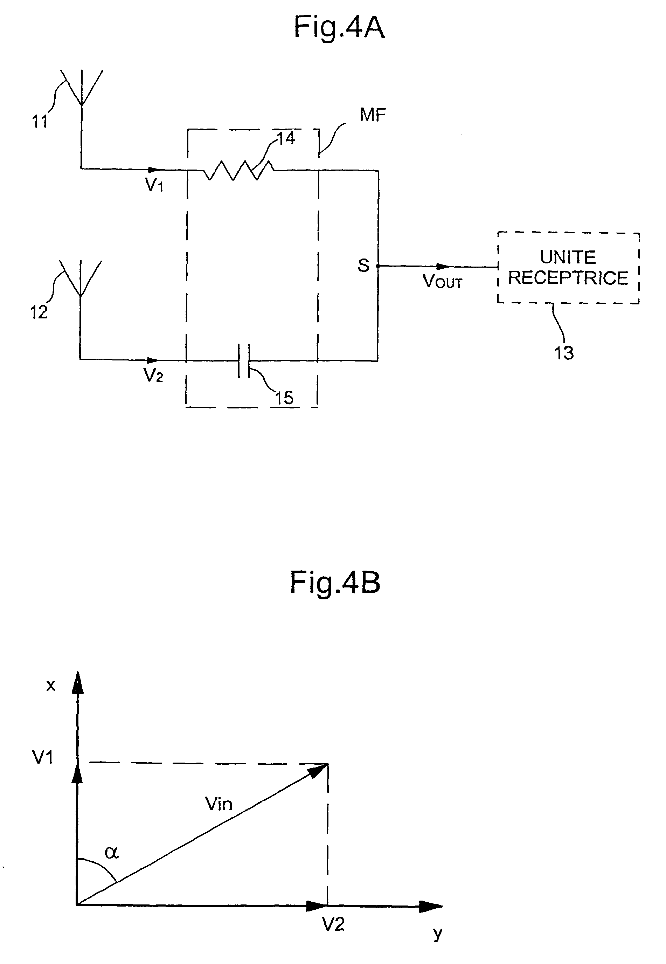

Le récepteur, par exemple placé dans une clé sans contact, représenté à la figure 4A, et désigné par la référence générale R, comprend deux antennes 11 et 12 orientées suivant des axes de réception différents définissant le plan de réception du récepteur. De préférence, les antennes sont orientées de manière à former un repère sensiblement orthogonal. Ainsi, les signaux externes émis par un émetteur, non représenté, et placé par exemple dans un véhicule automobile, sont décomposés dans le repère formé par les deux antennes du récepteur selon des première V1 et deuxième V2 composantes.

Cette décomposition est représentée à la figure 4B. Si l'on considère qu'un signal externe Vin reçu par le récepteur, dans le plan de réception formé par les deux axes de réception "x" et "y", respectivement des deux antennes 11 et 12, est de la forme suivante :

$$\text{Vin} = \text{V0.cos}\omega t \qquad\qquad (1)$$

où V0 correspond à l'amplitude et $\cos\omega t$ à la phase du signal externe reçu.

Alors les composantes V1 et V2 délivrées par les antennes au reste du circuit de réception sont de la forme suivante :

$$\text{V1} = \text{Vin.cos}\alpha \qquad\qquad (2)$$

$$V2 = Vin.\sin\alpha \qquad\qquad (3)$$

où "$\alpha$" représente l'angle entre le signal externe reçu Vin et l'axe de réception, par exemple "x", d'une des antennes.

Une unité réceptrice 13 est placée en sortie des antennes 11 et 12 dans le but de récupérer les signaux V1 et V2 délivrées par ces dernières. L'entrée de cette unité réceptrice 13 est représentée par le noeud S. Des moyens de filtrage MF comprenant un élément résistif 14 et un élément capacitif 15 sont connectés entre les antennes 11 et 12 d'une part et l'unité réceptrice 13 d'autre part. L'élément résistif, par exemple une résistance 14, est connecté entre la sortie d'une des deux antennes, par exemple 11 et le noeud S et l'élément capacitif, par exemple un condensateur 15, est connecté entre l'autre antenne 12 et ce noeud S.

Selon une variante, les éléments résistif et capacitif peuvent être notamment des transistors connectés adéquatement de manière à obtenir l'élément désiré.

Dans le cadre de cette structure, les antennes 11 et 12 peuvent être assimilées à des sources de tensions délivrant respectivement les signaux V1 et V2. En application du théorème de superposition à cette structure, pour connaître la fonction de transfert liant la tension de sortie Vout au signal externe reçu Vin, il suffit de calculer cette fonction en considérant les antennes 11 et 12 , ou sources de tension équivalentes, séparément. La fonction de transfert réelle (Vout / Vin) est donnée par la somme des fonctions de transfert calculée séparément.

$$\frac{Vout}{Vin} = \frac{Vout1}{Vin} + \frac{Vout2}{Vin} \qquad\qquad (4)$$

Si l'on considère seulement la source de tension équivalente à l'antenne 11, la source de tension équivalente à l'antenne 12 étant considérée comme court-circuitée, on a la première fonction de transfert suivante :

$$\frac{Vout1}{Vin} = \frac{\cos\alpha}{1+j\omega.R.C} \qquad\qquad (5)$$

où R représente la valeur de la résistance 14, et C représente la capacité du condensateur 15.

Si l'on considère seulement la source de tension équivalente à l'antenne 12, la source de tension équivalente à l'antenne 11 étant considérée comme court-circuitée, on a la deuxième fonction de transfert suivante :

$$\frac{Vout2}{Vin} = \frac{j\omega.R.C\sin\alpha}{1+j\omega.R.C} \qquad\qquad (6)$$

On obtient ainsi, la fonction de transfert de la structure globale :

$$\frac{Vout}{Vin} = \frac{\cos\alpha+j\omega.R.C\sin\alpha}{1+j\omega.R.C} \qquad\qquad (7)$$

L'un des objectifs de l'invention est d'obtenir un signal de sortie ayant une amplitude constante quelle que soit l'orientation du récepteur par rapport à l'émetteur, c'est-à-dire indépendante de l'angle "$\alpha$", dans la plage de fréquence que l'on désire. Pour le vérifier, il suffit de calculer le module de la fonction de transfert :

$$\left|\frac{Vout}{Vin}\right| = \sqrt{\frac{\cos^2\alpha+\omega^2.R^2.C^2.\sin^2\alpha}{1+\omega^2.R^2.C^2}} \qquad\qquad (8)$$

A la fréquence de coupure $\omega c$ du circuit, on a la relation suivante :

$$\omega c.R.C = 1 \qquad\qquad (9)$$

Le circuit est agencé de manière à ce que la fréquence de coupure ωc soit sensiblement centrée dans la plage de fréquences souhaitée dans le cadre de l'application.

Ainsi autour de la fréquence de coupure, le module du circuit est donné par la formule suivante :

$$\left|\frac{Vout}{Vin}\right| = \frac{1}{\sqrt{2}} \qquad\qquad (10)$$

L'amplitude du signal de sortie est donc indépendante de l'angle "α" entre le signal externe reçu Vin et les axes de réception des antennes, ce qui est le but recherché.

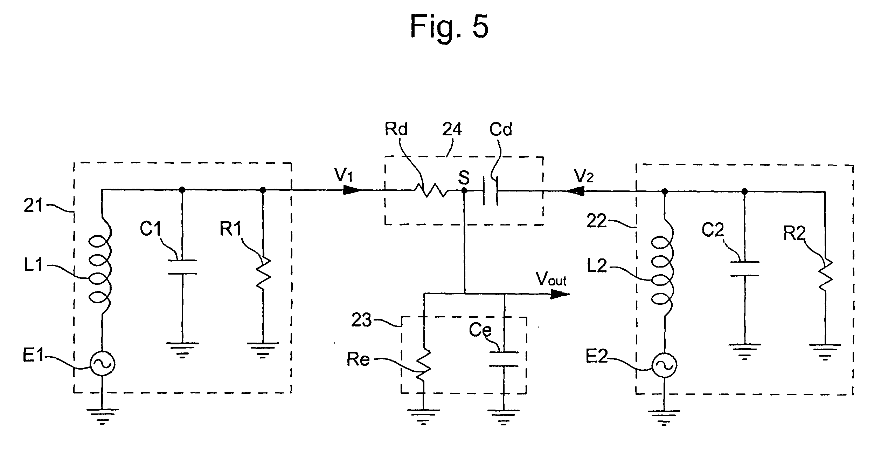

La figure 5 représente le récepteur portable selon l'invention en intégrant les composants des antennes et les éléments équivalents introduits par l'unité réceptrice placée en sortie.

Chacune des deux antennes 21 et 22 peut être décomposée en quatre éléments, comprenant une source de tension, E1 et E2, délivrant une tension équivalente à la composante (Vin.cosα et Vin.sinα) du signal externe reçu selon l'axe de réception de l'antenne correspondante, une bobine, L1 et L2, placée en série de la source de tension, un condensateur, C1 et C2, placé en parallèle, et une résistance, R1 et R2, placée en parallèle. Les signaux délivrés en sortie de ces deux antennes 21 et 22 sont notés V1 et V2.

L'unité réceptrice 23 introduit des éléments équivalents sur le noeud S de sortie. Ces éléments comprennent notamment une résistance Re et un condensateur Ce non négligeables. La tension de sortie au noeud S, fournie à l'unité réceptrice, est notée Vout.

On retrouve comme à la figure 4, des moyens de filtrage 24 comprenant un élément résistif Rd connecté entre la sortie de l'antenne 21 et le noeud S et un élément capacitif Cd connecté entre l'autre antenne 22 et le noeud S.

Les deux sources de tensions E1 et E2 délivrent les tensions respectives suivantes :

$$E1 = k1.Vin.cos\alpha ; \qquad\qquad (11)$$

$$E2 = k2.Vin.sin\alpha ; \qquad\qquad (12)$$

où k1 et k2 sont des coefficients positifs dépendants de l'antenne correspondante, L1, R1 et C1 ou L2, R2 et C2.

En effet, il est important de noter que les solutions de l'art antérieur ne prévoient pas le cas où les antennes du récepteur sont distinctes, cas qui est compris dans la solution selon l'invention.

De la même manière que dans le cas du circuit de la figure 4, la fonction de transfert Vout / Vin, peut être calculée au moyen du théorème de superposition.

Dans un premier temps, la fonction de transfert est calculée lorsque la source de tension E1 est activée et la source de tension E2 est court-circuitée. Cette première fonction de transfert permet d'obtenir la contribution de la première antenne 21.

$$\frac{Vout1}{Vin} = \frac{k1.cos\alpha\left(\dfrac{1}{Rd.j\omega.L1}\right)D2}{D1.D2\left[\dfrac{1}{Rd}+\dfrac{1}{Re}+j\omega(Cd+Ce)\right]-D2\left(\dfrac{1}{Rd}\right)^2-D1(j\omega.Cd)^2} \qquad\qquad (13)$$

avec :

$$D1 = \frac{1}{j\omega.L1}+j\omega.C1+\frac{1}{R1}+\frac{1}{Rd} ; \qquad\qquad (14)$$

$$D2 = j\omega(C2 + Cd) + \frac{1}{j\omega.L2} + \frac{1}{R2} \; ; \tag{15}$$

Et dans un deuxième temps, la fonction de transfert est calculée lorsque la source de tension 21 est court-circuitée et la source de tension 22 est activée.

$$\frac{Vout2}{Vin} = \frac{k2.sin\alpha\left(\frac{Cd}{L2}\right)D1}{D1.D2.\left[\frac{1}{Rd} + \frac{1}{Re} + j\omega(Cd + Ce)\right] - D2\left(\frac{1}{Rd}\right)^2 - D1(j\omega.Cd)^2} \tag{16}$$

D1 et D2 ayant été définis plus haut.

La fonction de transfert globale du circuit est donnée par la somme des deux fonctions sus calculées selon le théorème de superposition :

$$\frac{Vout}{Vin} = \frac{k1.cos\alpha\left(\frac{1}{Rd.j\omega.L1}\right)D2 + k2.sin\alpha\left(\frac{Cd}{L2}\right)D1}{D1.D2\left[\frac{1}{Rd} + \frac{1}{Re} + j\omega(Cd + Ce)\right] - D2\left(\frac{1}{Rd}\right)^2 - D1(j\omega.Cd)^2} \tag{17}$$

Sachant que le module de cette fonction de transfert doit être indépendant de l'angle "$\alpha$", cela implique que le numérateur de la formule précédente soit indépendant de "$\alpha$", on obtient alors la formule suivante en développant D1 et D2 :

$$\left(\frac{1}{R2}\right)^2 + \left(\omega(C2 + Cd) - \frac{1}{\omega.L2}\right)^2 = \left(\frac{k2.L1.\omega.Rd.Cd}{k1.L2}\right)^2\left(\left(\frac{1}{R1} + \frac{1}{Rd}\right)^2 + \left(\omega.C1 - \frac{1}{\omega.L1}\right)^2\right) \tag{18}$$

Cette équation offre beaucoup de degrés de liberté, ce qui rend la détermination des valeurs des différents éléments relativement complexe. Toutefois, il a été montré dans le cadre de l'invention, qu'il est possible de restreindre le nombre des degrés de liberté en imposant certaines contraintes avantageusement définies.

C'est pourquoi, un autre objet de l'invention concerne également la méthode de détermination des valeurs des composants utilisables pour ce récepteur portable.

Une première condition intéressante est d'imposer une contrainte en fonction de la bande passante désirée dans la plage de fréquences donnée de l'émetteur et du récepteur. Les valeurs des inductances L1 et L2 des bobines sont également imposées, ainsi que les coefficients positifs k1 et k2 de sensibilité des antennes. De plus, la fréquence d'accord $\omega0$, également appelée fréquence de travail, est connue, ainsi que les caractéristiques en entrée de l'unité réceptrice.

Pour déterminer les valeurs des composants utilisés, on admet, au vu de l'équation précédente, l'indépendance du signal Vout en fonction de l'angle "$\alpha$", et l'on suppose également que la bande passante demandée ne met pas en défaut cette assertion.

A partir de ces hypothèses préliminaires, on peut choisir deux valeurs de "$\alpha$" pour déterminer les conditions qu'implique une contrainte de bande passante et / ou de gain. On choisira par exemple, les valeurs 0 et $\pi/2$, ce qui fournit respectivement les couples de valeurs suivants (cos$\alpha$ = 1; sin$\alpha$ = 0) et (cos$\alpha$ = 0; sin$\alpha$ = 1).

A partir des équations générales calculées précédemment, on cherche les expressions possibles pour les éléments D1 et D2. Il est à noter que le système est réalisable à la condition que les termes en $\omega^2$ proviennent de termes complexes en $\omega$ et non de termes réels en $\omega$.

On pose donc :

$$D2 = a + jb \; ; \tag{19}$$

$$j\omega.Cd.Rd.(k2/k1).(L1/L2).D1 = c + jd \qquad (20)$$

Pour éliminer "$\alpha$", on choisit de préférence les deux conditions suivantes :

$$a^2 + b^2 = c^2 + d^2 \text{ (égalité des modules)} \qquad (21)$$

$$a.c + b.d = 0 \text{ (orthogonalité)} \qquad (22)$$

Il a été montré dans le cadre de l'invention, que le choix de ces deux conditions entraînent trois conséquences avantageuses.
Premièrement, les circuits oscillants constituées par les antennes présentent une même fréquence de résonance due à l'annulation de la condition d'orthogonalité :

$$L1.C1 = L2.(Cd + C2) ; \qquad (23)$$

Deuxièmement, les deux circuits oscillants présentent une même charge équivalente, c'est-à-dire une même fréquence d'accord et un maintien de l'orthogonalité, les conditions devant être respectées dans la bande passante autour de la fréquence d'accord $\omega 0$ :

$$\frac{1}{C1}\left(\frac{1}{R1}+\frac{1}{Rd}\right)=\frac{1}{(C2+Cd)R2} \quad ; \qquad (24)$$

Cette expression permet également de régler le facteur de qualité du récepteur.
Troisièmement, à partir de l'égalité des modules, à la fréquence d'accord $\omega 0$, avec l'annulation des termes de résonance, on obtient l'équation suivante sur le gain :

$$(k2/k1).Cd.Rd = 1 / \omega 0 ; \qquad (25)$$

Ces trois conséquences permettent avantageusement d'obtenir des conditions respectivement sur la fréquence pour la première, sur la charge pour la deuxième, et sur le gain pour la troisième.
Pour calculer simplement les valeurs des composants de ce circuit, il a été avantageusement remarqué que la tension de sortie Vout correspond, de manière décalée temporellement, à la tension du signal externe reçu Vin à un coefficient multiplicatif près. Il est à noter que ce coefficient varie peu dans une plage de fréquence limitée. On notera également que les valeurs des composants sont modifiables pour composer les éventuels éléments parasites.
On remarque encore que les deux entrées définies par les deux antennes sont assimilables à deux circuits oscillants parallèles équivalents. L'un comprend par exemple, les composants L1, C1 et R1 en parallèle avec Rd, et l'autre comprend L2, R2 et C2 en parallèle avec Cd.
Ces deux remarques montrent qu'il suffit d'étudier l'allure de l'excitation au niveau de l'un des circuits oscillant d'entrée, au lieu d'avoir à étudier la bande passante au niveau de la sortie. Par exemple on étudie le deuxième circuit oscillant comprenant L2, R2 et C2 en parallèle de Cd.
On a $\omega 0.L2$ fixé par le choix de la fréquence d'accord $\omega 0$, ce qui permet de déduire C2 en parallèle de Cd. De même on a le facteur de qualité fixé par la sensibilité nécessaire, ce qui permet de déduire R2.
On peut avantageusement jouer sur la répartition entre la capacité des deux condensateurs C2 et Cd pour optimiser le gain en sortie. On notera qu'un amplificateur, non représenté, peut être prévu par exemple en entrée de l'unité réceptrice.
La détermination de ces composants permet en utilisant les autres équations sus-décrites de retrouver les composants de l'autre circuit oscillant, notamment en se plaçant à la fréquence de résonance.

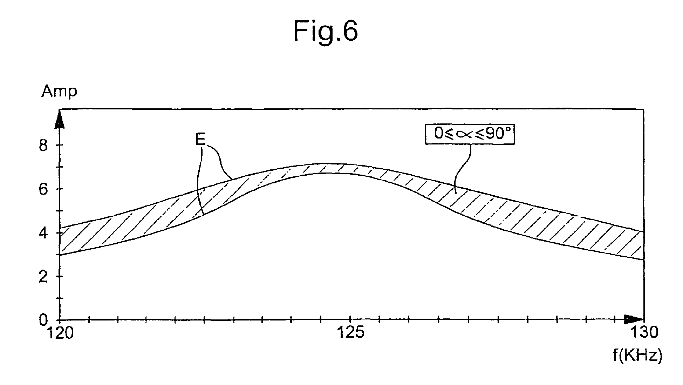

La figure 6 est une simulation du fonctionnement du récepteur portable selon le mode de réalisation de la figure 5, représentant l'évolution de l'amplitude du signal de sortie en fonction de l'angle entre le signal émis par l'unité d'identification comprenant l'émetteur et les antennes de l'identifiant comprenant le récepteur portable.

Comme il est clairement visible, quel que soit l'angle entre le signal émis par l'unité d'identification et les antennes de l'identifiant, l'amplitude du signal de sortie Vout est comprise dans l'enveloppe E et est donc sensiblement constante, notamment autour de la fréquence d'accord, fixée par exemple à 125 KHz. La plage de fréquences couvrant les fréquences de 120 à 130 KHz. On notera qu'il est tout à fait possible de prendre une fréquence d'accord de n'importe quelle ordre, et notamment de l'ordre du MHz, et du GHz.

Il est à noter que l'élément résistif ainsi que l'élément capacitif peuvent être notamment des transistors connectés adéquatement.

Il est bien entendu que la description n'est donnée qu'à titre d'exemple et que d'autres modes de réalisation, en particulier de la méthode de détermination des composants, peuvent faire l'objet de la présente invention.

## Revendications

1. Récepteur portable, comprenant deux antennes (21, 22) respectivement orientées suivant des axes différents pour recevoir une première (E1) et une seconde (E2) composante d'un signal électromagnétique externe (Vin) dans une plage de fréquences donnée, des moyens de filtrage (24) disposés entre les deux antennes d'une part, et une unité réceptrice (23) d'autre part, **caractérisé en ce que** les moyens de filtrage comprennent un élément résistif (Rd) connecté entre une des deux antennes et l'unité réceptrice et un élément capacitif (Cd) connecté entre l'autre antenne et l'unité réceptrice.

2. Récepteur portable selon la revendication 1, **caractérisé en ce que** les axes de réception des deux antennes sont sensiblement orthogonaux, **en ce que** les antennes constituent des circuits oscillants (L1, C1, R1 et L2, C2, R2) et **en ce que** les éléments résistif et capacitif ont des valeurs déterminées en fonction des circuits oscillants et de l'unité réceptrice.

3. Récepteur portable selon la revendication 2, **caractérisé en ce que** les circuits oscillants présentent une fréquence de résonance sensiblement égale.

4. Récepteur portable selon la revendication 2 ou 3, **caractérisé en ce que** les circuits oscillants présentent une charge équivalente sensiblement égale.

5. Récepteur portable selon l'une des revendications 2 à 4, **caractérisé en ce que** le gain du récepteur est ajustable en fonction desdites valeurs des éléments résistif et capacitif.

6. Récepteur portable selon la revendication 5, **caractérisé en ce que** l'ajustement du gain est optimisé par une répartition des capacités (C2 et Cd) entre l'élément capacitif et le circuit oscillant correspondant.

## Claims

1. Portable receiver comprising two antennae (21, 22) orientated respectively along different axes to receive a first (E1) and a second (E2) component of an external electromagnetic signal (Vin) within a given frequency range, filtering means (24) arranged between the two antennae on the one hand, and a receiving unit (23), on the other hand, **characterized in that** the filtering means comprises a resistive element (Rd) connected between one of the two antennae and the receiving unit and a capacitive element (Cd) connected between the other antenna and the receiving unit.

2. Portable receiver according to claim 1, **characterised in that** the receiving axes of the two antennae are substantially perpendicular, **in that** the antennae form oscillating circuits (L1, C1, R1 and L2, C2, R2) and **in that** the resistive and capacitive elements have determined values as a function of the oscillating circuits and the receiving circuit.

3. Portable receiver according to claim 2, **characterised in that** the oscillating circuits have a substantially equal resonance frequency.

4. Portable receiver according to claim 2 or 3, **characterised in that** the oscillating circuits have a substantially equal load.

5. Portable receiver according to one of claims 2 to 4, **characterised in that** the gain of the receiver can be adjusted as a function of said values of the resistive and capacitive elements.

6. Portable receiver according to claim 5, **characterised in that** the adjustment of the gain is optimised by a repartition of the capacitors (C2 and Cd) between the capacitive element and the corresponding oscillating circuit.

**Patentansprüche**

1. Tragbarer Empfänger, umfassend zwei Antennen (21, 22), die jeweils gemäß verschiedenen Achsen orientiert sind, um eine erste (E1) und eine zweite (E2) Komponente eines äußeren elektromagnetischen Signals (Vin) in einem gegebenen Frequenzbereich zu empfangen, wobei Filtermittel (24) zwischen den beiden Antennen einerseits und einer Empfangseinheit (23) andererseits angeordnet sind, **dadurch gekennzeichnet, daß** die Filtermittel ein resistives Element (Rd), das zwischen einer der beiden Antennen und der Empfangseinheit verbunden ist, und ein kapazitives Element (Cd), das zwischen der anderen Antenne und der Empfangseinheit verbunden ist, umfassen.

2. Tragbarer Empfänger nach Anspruch 1, **dadurch gekennzeichnet, daß** die Empfangsachsen der beiden Antennen im wesentlichen orthogonal sind, daß die Antennen Schwingkreise (L1, C1, R1 und L2, C2, R2) bilden, und daß die resistiven und kapazitiven Elemente in Abhängigkeit der Schwingkreise und der Empfangseinheit bestimmte Werte aufweisen.

3. Tragbarer Empfänger nach Anspruch 2, **dadurch gekennzeichnet, daß** die Schwingkreise eine im wesentliche gleiche Resonanzfrequenz aufweisen.

4. Tragbarer Empfänger nach Anspruch 2 oder 3, **dadurch gekennzeichnet, daß** die Schwingkreise eine im wesentlichen gleiche gleichwertige Ladung aufweisen.

5. Tragbarer Empfänger nach einem der Ansprüche 2 bis 4, **dadurch gekennzeichnet, daß** die Verstärkung des Empfängers in Abhängigkeit von den Werten des resistiven und kapazitiven Elements einstellbar ist.

6. Tragbarer Empfänger nach Anspruch 5, **dadurch gekennzeichnet, daß** die Einstellung der Verstärkung optimiert ist durch eine Aufteilung von Kapazitäten (C2 und Cd) zwischen dem kapazitiven Element und dem entsprechenden Schwingkreis.

# Fig.1
## (ART ANTERIEUR)

# Fig.2
## (ART ANTERIEUR)

# Fig.3A
## (ART ANTERIEUR)

# Fig.3B
## (ART ANTERIEUR)

# Fig.4A

# Fig.4B

Fig. 5

# Fig.6